# NOUVEAU FASCICULE DE BREVET EUROPEEN

(11) **EP 2 547 532 B2**
(45) Date de publication et mention de la décision concernant l'opposition: **08.01.2025**
(45) Mention de la délivrance du brevet: 17.06.2015
(21) Numéro de dépôt: 11714364.4
(22) Date de dépôt: 16.03.2011
(51) Int. Cl.: B41M 3/14, B41M 3/00, C09D 11/50, B41M 1/12, B41M 1/14, B41M 1/18

(54) **PROCÉDÉ DE RÉALISATION D'UNE IMAGE TRANSPARENTE POLYCHROMATIQUE IMPRIMÉE IRIDESCENTE**
VERFAHREN ZUR HERSTELLUNG EINES IRIDESZENTEN POLYCHROMATISCHEN DURCHSICHTIGEN DRUCKBILDES
METHOD OF PRODUCING AN IRIDESCENT POLYCHROMATIC TRANSPARENT PRINTED IMAGE

(30) Priorité: 17.03.2010 FR 1001060
(43) Date de publication de la demande: 23.01.2013
(73) Titulaire: FASVER, 34670 Baillargues (FR)
(72) Inventeur: TRANTOUL, François, 34400 Lunel (FR); PHILIPPE, Eric, 13430 Eyguières (FR); BES, Laurence, 34830 Jacou (FR)
(74) Mandataire: HGF
(86) Numéro de dépôt international: PCT/FR2011/050535
(87) Numéro de publication internationale: WO 2011/114056

(56) Documents cités:
- EP-A1- 0 490 825
- EP-A1- 0 657 297
- EP-A2- 1 624 030
- EP-A2- 2 020 303
- EP-B1- 1 436 762
- WO-A1-2004/087437
- WO-A1-2005/115766
- FR-A1- 2 429 292
- RUDOLF L. VAN RENESSE: "Optical Document Security", 2005, ARTECH HOUSE, article RUDOLF L. VAN RENESSE: "Chapter 7: Interference-Based Security Features", pages: 223 - 237
- ULRICH ZORLL ET AL: "Römpp Lexikon - Lacke und Druckfarben", 1998, GEORG THIEME VERLAG, article "pages 264,272,304,378,438,451,528-529"
- Brochure« Irisierende Effekte. Das ideale OVD für Upgrades » de la société Papierfabrik Louisenthal

## Description

L'invention concerne un procédé de réalisation d'une image transparente polychromatique imprimée iridescente quelconque (c'est-à-dire pouvant incorporer toutes les nuances de couleur et de forme diverses éventuellement des variations de couleurs continues (dégradé, fondu...), des ombres, des variations d'intensité, des effets de mouchetés...) dont au moins deux couleurs -notamment chaque couleur- changent simultanément selon l'angle de vue de ladite image transparente sous éclairage en lumière visible.

L'invention concerne aussi une image transparente polychromatique iridescente quelconque ainsi obtenue et l'utilisation d'une telle image transparente polychromatique iridescente quelconque pour l'authentification de documents et/ou de produits supportant une telle image sous éclairage en lumière visible.

Une telle image transparente polychromatique imprimée iridescente quelconque peut présenter de nombreux intérêts et diverses applications, notamment à titre d'authentification et/ou à des fins de décoration.

Dans tout le texte :
- l'expression « lumière visible » désigne une lumière dont la composition spectrale est située dans le spectre visible, de 0,4 µm à 0,8 µm ;
- l'expression « image transparente » désigne une image qui lorsqu'elle recouvre un document ou un produit permet de distinguer -notamment de lire- par visualisation normale (sans instrument spécifique), au moins sous éclairage en lumière visible, des caractères ou des motifs sous-jacents du document. Il est possible que l'image transparente confère en elle-même une certaine opalescence aux caractères et/ou motifs du document, mais une image transparente ne masque pas totalement, au moins sous éclairage en lumière visible, les caractères et/ou motifs sous-jacents du document.

Des marquages iridescents sont souvent utilisés aux fins d'authentification d'un document -notamment d'un billet de banque-. On utilise à cet effet des encres, dites OVI^{®} (pour « Optically Variable Inks ») adaptées pour former des motifs iridescents en surface d'un support solide. De telles encres ne permettent pas de former un motif iridescent qui soit polychromatique et transparent, notamment adapté pour pouvoir être appliqué et s'étendre en surface d'un document imprimé ou d'un produit tout en permettant la lecture de motifs et/ou impressions sous-jacents.

EP 2 020 303 décrit une image polychromatique, obtenue par transfert thermique de pigments interférentiels, dont les couleurs reproduisent les couleurs d'une image de référence que selon un seul angle de vue. Une telle image polychromatique, dont les couleurs réelles ne sont visibles que selon un seul angle de vue, n'est pas transparente.

Or, dans diverses applications, la réalisation à faible coût d'une image iridescente et transparente à reproduire est particulièrement importante. Tel est le cas en particulier sur les documents officiels tels que les passeports, les cartes d'identité, les permis de conduire, les cartes de séjour, les cartes d'immatriculation de véhicules, les billets de banque, les chèques ou autres titres de paiement, les titres de transport... Tel est le cas aussi sur les produits de valeur, notamment les emballages, parfums, cosmétiques... Une telle image transparente permet en effet de conférer une identification et/ou une authentification de premier niveau par superposition avec des motifs et/ou inscriptions (par exemple, des inscriptions variables) sous-jacentes, sans nécessiter une portion de surface spécifique pour cette image, c'est-à-dire sans réduire la place disponible (souvent réduite) pour la réalisation de motifs et/ou inscriptions sous-jacentes.

Une solution connue pour réaliser une image complexe transparente consiste à utiliser un hologramme transparent. Cette solution est néanmoins très couteuse et complexe à réaliser.

EP 0 230 097 décrit un composant optique pour l'authentification d'un document ou d'un produit. Un tel composant présente une première zone métallisée produisant un effet d'arc-en-ciel selon une première orientation du composant par rapport à une direction d'éclairage, ledit effet d'arc-en-ciel disparaissant lorsque le composant est orienté perpendiculairement à la première orientation par pivotement autour d'une direction normale à la surface. Le composant comprend aussi une seconde zone dé-métallisée et enduite d'un matériau diélectrique produisant un effet coloré d'une première couleur pour une première orientation du composant et d'une deuxième couleur différente de la première couleur pour l'orientation perpendiculaire à la première orientation.

Un tel composant optique est complexe, couteux, et limité dans ses applications au cas d'une authentification par rotation dans un plan dudit composant placé sur un document ou sur un produit à authentifier. Il est en outre limité à la configuration dans laquelle un opérateur apte à authentifier le document ou le produit doit être positionné dans le plan comprenant la source de lumière et le composant optique.

EP 0 230 097 décrit aussi un procédé de préparation d'un tel composant dans lequel on réalise une étape d'estampage d'une couche de vernis supporté par un film transparent, puis une étape de métallisation du vernis estampé, puis une étape de dé-métallisation partielle du vernis estampé et une étape de dépôt d'un matériau diélectrique transparent à indice optique élevé, par exemple du sulfure de zinc.

Un tel procédé comprend de nombreuses étapes successives. Il nécessite en particulier une étape de dépôt métallique sous vide qui nécessite des moyens complexes et lourds, notamment pour la formation et le maintien du vide.

L'invention vise donc à pallier ces inconvénients et à proposer un procédé adapté pour permettre la réalisation d'une image transparente polychromatique imprimée iridescente quelconque. L'invention vise en particulier à permettre la reproduction d'une image d'origine qui est polychromatique en synthèse soustractive (principe de la couleur matière), sous une forme imprimée transparente et iridescente, dont au moins deux couleurs changent simultanément selon l'angle de vue sous éclairage par au moins une source de lumière visible, et qui peut incorporer des nuances et combinaisons de couleurs très variées, et des motifs complexes.

EP-A-0657297 décrit un document de sécurité comprenant un support transparent, des motifs comprenant des pigments interférentiels A s'étendant sur l'une des faces du support transparent et des motifs comprenant des pigments interférentiels B s'étendant sur l'autre face du support transparent.

L'invention vise également à proposer une telle image pouvant être placée sur un produit ou un document à identifier et/ou authentifier- notamment sur un document de petite dimension- sur lequel la surface disponible pour la mise en place de motifs et/ou inscriptions, notamment à des fins d'identification et/ou d'authentification est restreinte.

L'invention vise en particulier à proposer une telle image permettant la réalisation de motifs d'identification et/ou d'authentification de premier niveau, c'est-à-dire visualisables normalement et directement sans nécessiter d'équipement spécifique de détection desdits motifs.

L'invention vise en particulier à proposer un procédé pour la réalisation de motifs d'identification et/ou d'authentification, pouvant être placés sur des documents et/ou des produits, et qui soient susceptibles de pouvoir être analysés de façon fiable au moyen de dispositifs de lecture automatisés.

L'invention vise aussi à réaliser une image transparente polychromatique imprimée iridescente dont seules les couleurs changent selon l'angle de vue de ladite image transparente sous un éclairage par au moins une source de lumière visible.

L'invention vise également à atteindre tous ces objectifs à moindre coût.

L'invention vise de surcroît à proposer une telle solution qui préserve les habitudes de travail des personnels, soit facile à utiliser, et n'implique pour sa mise en oeuvre que peu de manipulations.

Pour ce faire, l'invention concerne un procédé de réalisation d'une image transparente polychromatique imprimée iridescente quelconque dont au moins deux couleurs -notamment toutes les couleurs- changent simultanément lors d'un changement d'angle de vue de ladite image sous éclairage par au moins une source de lumière visible, caractérisé en ce que :
- on imprime séparément, l'une après l'autre, au moins deux images, dites images imprimées monochromatiques,
- chaque image imprimée monochromatique est imprimée en utilisant une composition d'impression comprenant une proportion d'une poudre comprenant au moins un pigment interférentiel, ladite poudre étant dispersée dans un milieu liquide d'impression, chaque pigment interférentiel et ladite proportion sont choisis de telle sorte que ladite image imprimée monochromatique est transparente,

- les pigments interférentiels de chaque composition d'impression sont choisis de façon que les images imprimées monochromatiques soient de couleurs différentes,
- les différentes images imprimées monochromatiques forment, selon une première plage angulaire de visualisation, une image polychromatique transparente selon une première composition de couleurs en synthèse additive, et selon une deuxième plage angulaire de visualisation, différente de ladite première plage angulaire de visualisation, une deuxième composition de couleurs en synthèse additive.

De façon totalement inattendue, les inventeurs ont observé qu'il est possible d'imprimer au moins deux images imprimées monochromatiques superposées avec des pigments interférentiels distincts, et d'obtenir ainsi une image polychromatique imprimée iridescente quelconque qui est transparente, et qui change simultanément de couleurs selon une même variation d'angle de vue sous éclairage par au moins une source de lumière visible. De façon inexpliquée, on obtient en effet en réalité un changement simultané des couleurs des différentes images imprimées monochromatiques entre un premier angle de vue sous lequel chacune des images imprimées monochromatiques apparait sous une première couleur, et un deuxième angle de vue, différent du premier angle de vue, sous lequel chacune des images imprimées monochromatiques apparait sous une deuxième couleur.

En outre, alors que les pigments interférentiels sont normalement utilisés pour conférer un effet nacré ou brillant dans des peintures épaisses et opaques, les inventeurs ont constaté qu'en réalité ils peuvent être utilisés pour former des images transparentes et émettent cependant des nuances de couleur particulièrement denses et visibles. Néanmoins la couleur ainsi conférée résulte non pas du principe de la couleur matière (synthèse soustractive), mais doit être, au contraire, traitée en synthèse additive. De façon aussi inattendue, il se trouve que les variations de couleurs selon l'angle de vue permettent d'obtenir trois couleurs fondamentales selon un premier angle de vue, et trois autres couleurs fondamentales selon un deuxième angle de vue, de sorte que l'image est visible sous forme parfaitement polychromatique sous chaque angle de vue.

Avantageusement et selon l'invention :
- on choisit ou on réalise une image d'origine polychromatique en synthèse soustractive visible en lumière visible ;
- on réalise et on enregistre au moins trois images, dites images filtrées monochromatiques, par filtrage de l'image d'origine selon une bande passante spectrale inférieure ou égale à 15 nm centrée sur une longueur d'onde, dite longueur d'onde de filtrage, choisie parmi les longueurs d'onde d'au moins trois couleurs fondamentales, les différentes longueurs d'onde de filtrage des images filtrées monochromatiques étant deux à deux distinctes, chacune de ces longueurs d'onde de filtrage étant au moins approximativement égale à une longueur d'onde d'un pic de lumière réfléchie par un pigment interférentiel, sous éclairage par au moins une source de lumière visible ;
- on imprime chaque image imprimée monochromatique en reproduisant respectivement l'une des images filtrées monochromatiques, et en utilisant une composition d'impression comprenant au moins un pigment interférentiel présentant une longueur d'onde d'un pic de lumière réfléchie correspondant à ladite bande spectrale de filtrage, notamment pour un angle de vue sensiblement normal à l'image.

En particulier, un changement de couleur d'une telle image transparente selon l'invention est obtenu sous éclairage par au moins une source de lumière visible par réorientation de ladite image transparente entre une première position dans laquelle l'angle de visualisation correspond à une première direction de visualisation au moins sensiblement perpendiculaire au plan de l'image transparente et une deuxième position dans laquelle l'angle de visualisation correspond à une deuxième direction de visualisation, s'étendant dans un angle solide d'une valeur prédéterminée différente, notamment comprise entre 10° et 45°, autour de la première direction de visualisation.

Un tel changement de couleur simultané de chacune des images imprimées monochromatiques comprenant un pigment interférentiel permet un changement des couleurs de ladite image par réorientation de ladite image selon un changement d'angle de vue d'une valeur prédéterminée.

En particulier, un tel procédé selon l'invention est adapté pour réaliser une image présentant au moins un motif polychromatique formé d'une première couleur initiale et d'au moins une deuxième couleur initiale sous un premier angle de visualisation -notamment un angle de vision sensiblement perpendiculaire à l'image-, et dans lequel la première couleur initiale change en une première couleur finale sous un deuxième angle de visualisation distinct du premier angle de vision. Dans un mode de réalisation avantageux selon l'invention, la deuxième couleur initiale change, simultanément au changement de ladite première couleur initiale, en une deuxième couleur finale sous le même deuxième angle de visualisation distinct du premier angle de visualisation. Dans un mode de réalisation préférentiel selon l'invention, une troisième couleur initiale change, simultanément aux changements des première et deuxième couleurs initiales, en une troisième couleur finale selon le même deuxième angle de visualisation. Avantageusement, les trois pigments interférentiels sont choisis pour que les trois couleurs initiales soient trois couleurs fondamentales distinctes complémentaires susceptibles de former toutes les couleurs d'un spectre visible en synthèse additive et pour que les trois couleurs finales (visibles après réorientation de l'image) soient aussi trois couleurs fondamentales distinctes complémentaires susceptibles de former toutes les couleurs d'un spectre visible en synthèse additive.

Avantageusement, un procédé selon l'invention est adapté pour permettre une permutation simultanée d'une première couleur initiale en une première couleur finale et d'une deuxième couleur initiale en une deuxième couleur finale, la première couleur initiale étant sensiblement identique à la deuxième couleur finale, et la deuxième couleur initiale étant sensiblement identique à la première couleur finale. Dans ce mode de réalisation particulier, les deux couleurs initiales ne se superposent pas dans l'image transparente polychromatique imprimée iridescente.

Les inventeurs ont observé que contrairement à l'enseignement de l'état de la technique selon lequel les pigments interférentiels utilisés pour leurs effets brillants dans les peintures nacrées non transparentes -notamment pour les véhicules automobiles- dans une proportion comprise entre 2% et 6%, en poids, l'utilisation de pigments interférentiels en couches séparées selon un procédé selon l'invention permet d'obtenir une image transparente polychromatique dont au moins deux couleurs changent selon deux angles de vue distincts.

Avantageusement et selon l'invention :
- on réalise et on enregistre au moins trois images filtrées monochromatiques, les différentes longueurs d'onde de filtrage des images filtrées monochromatiques étant adaptées pour permettre de former par synthèse additive toutes les couleurs du spectre visible ;
- on imprime séparément l'une après l'autre -notamment l'une au dessus de l'autre-, au moins trois images imprimées monochromatiques.

Une image transparente polychromatique imprimée iridescente quelconque selon l'invention est adaptée pour fournir un premier niveau d'authentification -sous éclairage en lumière visible, et sous deux angles de vue distincts, l'image transparente polychromatique apparait selon deux distributions polychromatiques distinctes- et un deuxième niveau d'authentification -elle permet une lecture par transparence de motifs et/ou inscriptions sous-jacents à l'image. Ces deux distributions polychromatiques sont susceptibles d'être caractérisées par des analyses spectrophotométriques permettant d'identifier les pigments interférentiels.

Avantageusement, un procédé selon l'invention est aussi caractérisé par l'une au moins des caractéristiques suivantes :
- pour réaliser chacune des images filtrées monochromatiques, on éclaire un original de l'image d'origine polychromatique quelconque visible en lumière visible, et on filtre l'image polychromatique réfléchie par cet original éclairé selon une bande passante spectrale inférieure ou égale à 15 nm centré selon la longueur d'onde de filtrage de la couleur fondamentale correspondant à l'image filtrée monochromatique ; avantageusement, on filtre l'image polychromatique réfléchie avec des filtres passe bande ayant une bande passante spectrale de l'ordre de 10 nm, notamment avec des filtres interférentiels passe-bande ;
- on choisit, à titre de longueur d'onde de filtrage et des pics de lumière réfléchie par les pigments interférentiels sous éclairage de la source de lumière visible (en sélectionnant des moyens de filtrage et des pigments interférentiels appropriés), pour les différentes images imprimées monochromatiques d'un même jeu réalisant une reproduction d'une image d'origine -sous un angle de vue sensiblement perpendiculaire au plan de l'image imprimée monochromatique-, au moins une longueur d'onde dans le vert, au moins une longueur d'onde dans le rouge, et au moins une longueur d'onde dans le bleu ; avantageusement, on choisit des longueurs d'onde adaptées pour être séparées d'une même distance spectrale comprise entre 80 nm et 100 nm, notamment égale à 90 nm ; notamment une longueur d'onde dans le vert comprise entre 500 nm et 570 nm, une longueur d'onde dans le rouge comprise entre 600 nm et 680 nm, et une longueur d'onde dans le bleu comprise entre 430 nm et 480 nm ;
- avantageusement, on choisit chaque pigment interférentiel présentant un spectre de lumière réfléchie présentant une bande de lumière réfléchie dans le bleu, ou dans le rouge ou dans le vert ; avantageusement on choisit un premier pigment interférentiel présentant une bande de lumière réfléchie dans le bleu pour un premier angle de vue -notamment sensiblement perpendiculaire au plan de l'image imprimée monochromatique-, et une bande de lumière réfléchie dans le jaune pour un deuxième angle de vue -notamment à sensiblement 25° par rapport au plan de l'image imprimée monochromatique-, le deuxième angle de vue étant différent du premier angle de vue ; avantageusement on choisit un deuxième pigment interférentiel présentant une bande de lumière réfléchie dans le rouge pour le même angle de vue, et une bande de lumière réfléchie dans le vert pour le deuxième angle de vue ; avantageusement on choisit un troisième pigment interférentiel présentant une bande de lumière réfléchie dans le vert pour le premier angle de vue, et une bande de lumière réfléchie dans le rouge pour le deuxième angle de vue ;
- on imprime les images imprimées monochromatiques de façon que, dans l'ordre de réception de la lumière d'éclairage sous un angle de vue sensiblement perpendiculaire au plan des images imprimées monochromatiques, elles se présentent dans l'ordre bleu, rouge vert des longueurs d'onde de filtrage et des pics de lumière réfléchie par les pigments interférentiels ;
- on imprime les images imprimées transparentes monochromatiques les unes sur les autres, avec ou sans couche intermédiaire ;
- pour un même jeu réalisant une reproduction d'une image polychromatique d'origine, on imprime uniquement trois images imprimées monochromatiques transparentes, une dans le vert, une dans le rouge et une dans le bleu ; on imprime chaque image imprimée monochromatique transparente en une seule couche d'impression ;
- pour réaliser et enregistrer chaque image filtrée monochromatique, on capte l'image filtrée avec des moyens photosensibles à transfert de charge CCD et on enregistre une image numérisée correspondante ; on forme, à partir de chaque image filtrée monochromatique, une image tramée que l'on utilise ensuite pour imprimer l'image imprimée monochromatique transparente ; avantageusement, l'image tramée présente une trame de 60 à 133, notamment de l'ordre de 80 (cette valeur correspondant au nombre de lignes de points par pouce (2,54 cm) ;
- on imprime les différentes images imprimées monochromatiques transparentes d'un même jeu au moins sensiblement selon la même épaisseur d'impression ; on imprime chaque image imprimée monochromatique transparente de façon que la quantité de pigment interférentiel en chaque point soit fonction de l'intensité lumineuse de l'image d'origine polychromatique en ce point selon la longueur d'onde de filtrage correspondante (cette fonction étant proportionnelle dans le cas d'un positif, et inversement proportionnelle dans le cas d'un négatif) ; on utilise des pigments interférentiels présentant un facteur de pureté (rapport la quantité de lumière monochromatique réfléchie selon la longueur d'onde dominante du pic d'émission sur la somme de cette quantité de lumière monochromatique réfléchie et de la quantité de lumière visible réfléchie) approchant la valeur de 1, quasi monochromatique ayant un pic principal de lumière réfléchie, ou monochromatique ayant un et un seul pic de lumière réfléchie ;
- on laisse sécher et/ou durcir chaque composition d'impression après avoir imprimé une image imprimée monochromatique transparente et avant d'imprimer une autre image imprimée monochromatique transparente ;
- on imprime un jeu d'images imprimées monochromatiques transparentes qui sont des images positives d'une image d'origine, adaptées pour reproduire en synthèse additive un positif de l'image d'origine ; avantageusement on imprime un jeu d'images imprimées monochromatiques transparentes qui sont des images de couleurs complémentaires d'une image d'origine ;
- on imprime un jeu d'images imprimées monochromatiques transparentes qui sont des images négatives d'une image d'origine, adaptées pour reproduire en synthèse additive un négatif de l'image d'origine ; avantageusement on imprime un jeu d'images imprimées monochromatiques transparentes qui sont des images de couleurs complémentaires des images négatives d'une image d'origine ;
- pour imprimer chaque image imprimée monochromatique transparente, on utilise une composition d'impression qui incorpore un pigment interférentiel et qui est, au moins après séchage, transparente pour la lumière visible lorsqu'elle est placée sous éclairage en lumière visible ;
- on imprime les images imprimées monochromatiques transparentes par sérigraphie ; avantageusement, on utilise une composition d'impression formée d'un vernis sérigraphique à base de solvant(s) volatil(s) organique(s) non aqueux de type à durcissement par évaporation de solvant ; on réalise un écran d'impression sérigraphique, à partir de chaque image filtrée monochromatique, et on réalise les différents écrans d'impression sérigraphique à partir du même tissu ; en variante, rien n'empêche d'imprimer les images imprimées monochromatiques transparentes par flexographie, par offset, par héliographie ou par tout autre procédé d'impression connu, et adapté pour permettre l'impression de logos, images ou photographies sans limitation de design ; il est également possible d'utiliser une composition d'impression formée d'un vernis sérigraphique à polymérisation sous ultraviolets ;
- on imprime les images imprimées monochromatiques transparentes successives sur la face externe libre d'une pellicule transparente dans le visible comprenant au moins une couche formée d'une impression continue d'une composition d'impression, par exemple un film tel que décrit dans EP 0 271 941 ou US 5 232 527.

L'invention permet pour la première fois d'obtenir à coût réduit une image transparente polychromatique imprimée iridescente quelconque dont au moins deux couleurs changent selon une même valeur de variation d'un angle de vue sous éclairage en lumière visible.

L'invention permet aussi d'obtenir une image transparente polychromatique imprimée iridescente quelconque qui est, sous un angle de vue sensiblement perpendiculaire au plan de ladite image, une reproduction fidèle, avec toutes les nuances de couleur et les formes qui peuvent varier à l'infini de façon continue, d'une image d'origine polychromatique quelconque visible en lumière visible. Cet original peut être un imprimé ou une image analogique mémorisée (photographique, cinématographie, vidéo...), ou une image numérisée mémorisée sur une mémoire de masse d'ordinateur ou autre.

Il est à noter que ce résultat est obtenu par mise en oeuvre non pas d'un filtrage large bande comme dans l'impression traditionnelle quadrichromique en synthèse soustractive, mais au contraire d'un filtrage sélectif à bande étroite en lumière visible et d'une synthèse additive trichromique sous éclairage en lumière visible.

Avantageusement et selon l'invention, pour imprimer chaque image imprimée monochromatique, on utilise une composition d'impression dans laquelle le pic de lumière réfléchie par chaque pigment interférentiel, sous éclairage par au moins une source de lumière visible, présente une largeur à 80% de la hauteur dudit pic comprise entre 10 nm et 30 nm.

Avantageusement et selon l'invention, pour imprimer chaque image imprimée monochromatique, on utilise une composition d'impression dans laquelle le pic de lumière réfléchie par chaque pigment interférentiel, sous éclairage par au moins une source de lumière visible, présente une largeur à 20% de la hauteur dudit pic comprise entre 15 nm et 40 nm.

Avantageusement et selon l'invention, pour imprimer chaque image imprimée monochromatique, on utilise une composition d'impression dans laquelle les particules formant chaque pigment interférentiel présentent une plus grande dimension moyenne comprise entre 5 µm et 40 µm -notamment de l'ordre de 20 µm-.

Avantageusement et selon l'invention, pour imprimer chaque image imprimée monochromatique, on utilise une composition d'impression dans laquelle les particules formant chaque pigment interférentiel sont des lamelles formées d'au moins un oxyde métallique.

Avantageusement et selon l'invention, chaque oxyde métallique est choisi dans le groupe formé des oxydes de titane, des oxydes d'aluminium et des oxydes d'étain.

Avantageusement et selon l'invention, pour imprimer chaque image imprimée monochromatique, on utilise une composition d'impression dans laquelle la proportion massique de chaque pigment interférentiel dans le liquide d'impression est inférieure à 25%, notamment comprise entre 10% et 25%, préférentiellement comprise entre 15% et 25%, en particulier de l'ordre de 20%.

Avantageusement et selon l'invention, on imprime chaque image imprimée monochromatique de telle sorte que la valeur de variation d'angle de vue pour laquelle le changement de couleur de l'image transparente polychromatique imprimée iridescente quelconque est visualisé est inférieure ou égale à 45° -notamment comprise entre 10° et 45°, en particulier de l'ordre de 25°-.

Avantageusement et selon l'invention, on choisit un premier pigment interférentiel dont le pic de lumière réfléchie, sous éclairage par au moins une source de lumière visible, présente, selon un premier angle de vue -notamment sensiblement perpendiculaire au plan de l'image imprimée monochromatique correspondante-, une intensité maximum de lumière réfléchie dont la longueur d'onde est comprise entre 430 nm et 480 nm. Avantageusement on choisit un premier pigment interférentiel dans le groupe formé des pigments interférentiels de couleur bleue et présentant un spectre de réflexion de la lumière visible sensiblement monochromatique, c'est-à-dire présentant une bande de réflexion de la lumière visible s'étendant sur une plage étroite de longueurs d'onde.

Avantageusement et selon l'invention, on choisit un deuxième pigment interférentiel dont le pic de lumière réfléchie, sous éclairage par au moins une source de lumière visible, présente, selon un premier angle de vue -notamment sensiblement perpendiculaire au plan de l'image imprimée monochromatique correspondante-, une intensité maximum de lumière réfléchie dont la longueur d'onde est comprise entre 600 nm et 680 nm. Avantageusement on choisit un deuxième pigment interférentiel dans le groupe formé des pigments interférentiels de couleur rouge et présentant un spectre de réflexion de la lumière visible sensiblement monochromatique, c'est-à-dire présentant une bande de réflexion de la lumière visible s'étendant sur une plage étroite de longueurs d'onde.

Avantageusement et selon l'invention, on choisit un troisième pigment interférentiel dont le pic de lumière réfléchie, sous éclairage par au moins une source de lumière visible, présente, selon un premier angle de vue -notamment sensiblement perpendiculaire au plan de l'image imprimée monochromatique correspondante-, une intensité maximum de lumière réfléchie dont la longueur d'onde est comprise entre 500 nm et 570 nm. Avantageusement on choisit un troisième pigment interférentiel dans le groupe formé des pigments interférentiels de couleur verte et présentant un spectre de réflexion de la lumière visible sensiblement monochromatique, c'est-à-dire présentant une bande de réflexion de la lumière visible s'étendant sur une plage étroite de longueurs d'onde.

En particulier, on choisit des pigments interférentiels présentant des pics respectifs de lumière réfléchie, sous éclairage par au moins une source de lumière visible, qui sont disjoints, c'est-à-dire qui présentent deux à deux sensiblement aucun recouvrement de leurs spectres de lumière réfléchie, sous éclairage par au moins une source de lumière visible.

Avantageusement et selon l'invention, on imprime d'abord une composition d'impression contenant un premier pigment interférentiel, puis une composition d'impression contenant un deuxième pigment interférentiel, puis une composition d'impression contenant un troisième pigment interférentiel. Avantageusement, on imprime d'abord le pigment interférentiel bleu, puis le pigment interférentiel rouge, puis le pigment interférentiel vert, les trois couleurs bleue, rouge et verte des premier, deuxième et troisième pigments interférentiels s'entendant selon un angle de vue sensiblement normal au plan de l'image imprimée.

Avantageusement et selon l'invention, on dépose par impression un film d'un matériau adhésif adapté pour permettre une fixation de l'image transparente sur un support.

L'invention s'étend par ailleurs à une image transparente polychromatique imprimée iridescente quelconque dans laquelle au moins deux couleurs -notamment toutes les couleurs- de ladite image transparente changent simultanément lors d'un changement d'angle de vue de ladite image sous éclairage par au moins une source de lumière visible, caractérisée en ce que lors du changement d'angle de vue de ladite image sous éclairage par au moins une source de lumière visible, une première couleur initiale permute en une première couleur finale et une deuxième couleur initiale permute simultanément en une deuxième couleur finale, la première couleur initiale étant sensiblement identique à la deuxième couleur finale, et la deuxième couleur initiale étant sensiblement identique à la première couleur finale.

L'invention s'étend à une image imprimée iridescente quelconque, transparente et polychromatique dans laquelle au moins deux couleurs de ladite image imprimée iridescente quelconque changent simultanément lors d'un changement d'angle de vue de ladite image sous éclairage par au moins une source de lumière visible, caractérisée en ce que lors du changement d'angle de vue de ladite image sous éclairage par au moins une source de lumière visible, une première couleur initiale permute en une première couleur finale et une deuxième couleur initiale permute simultanément en une deuxième couleur finale, la première couleur initiale étant sensiblement identique à la deuxième couleur finale, et la deuxième couleur initiale étant sensiblement identique à la première couleur finale.

L'invention concerne aussi une image transparente polychromatique imprimée iridescente quelconque obtenue par un procédé selon l'invention, dans laquelle :
- au moins deux couleurs de ladite image transparente changent simultanément lors d'un changement d'angle de vue de ladite image sous éclairage par au moins une source de lumière visible ;
- ladite image transparente comprenant au moins deux images, dites images imprimées monochromatiques, chaque image imprimée monochromatique comprenant au moins un pigment interférentiel réfléchissant une couleur sous éclairage par au moins une source de lumière visible.

Dans une image selon l'invention ;
- les différentes images imprimées monochromatiques forment, selon une première plage angulaire de visualisation, une image polychromatique transparente selon une première composition de couleurs en synthèse additive, et selon une deuxième plage angulaire de visualisation, différente de ladite première plage angulaire de visualisation, une deuxième composition de couleurs en synthèse additive de ladite image polychromatique transparente.

Avantageusement, chaque image imprimée monochromatique d'une image selon l'invention correspond au filtrage d'une image d'origine polychromatique en synthèse soustractive visible en lumière visible, selon une bande passante spectrale inférieure ou égale à 15 nm centrée sur une longueur d'onde, dite longueur d'onde de filtrage, choisie parmi les longueurs d'au moins trois couleurs fondamentales, les différentes longueur d'onde de filtrage des images filtrées monochromatiques étant deux à deux distinctes, chacune de ces longueurs d'onde de filtrage étant au moins approximativement égale à une longueur d'onde d'un pic de lumière réfléchie par le pigment interférentiel, sous éclairage par au moins une source de lumière visible, de l'image filtrée monochromatique correspondante.

Avantageusement, une image selon l'invention présente au moins trois couleurs qui changent simultanément lors d'un changement d'angle de vue sous éclairage par au moins une source de lumière visible.

Avantageusement, une image selon l'invention est aussi caractérisée par l'une au moins des caractéristiques suivantes :
- elle comprend au moins une image imprimée monochromatique transparente ayant au moins une longueur d'onde de pic de lumière réfléchie, sous éclairage par au moins une source de lumière visible, dans le vert pour un premier angle de vue, et dans le rouge pour un deuxième angle de vue (distinct du premier angle de vue) ; au moins une image imprimée monochromatique transparente ayant au moins une longueur d'onde de pic de lumière réfléchie, sous éclairage par au moins une source de lumière visible, dans le rouge pour le premier angle de vue, et dans le vert pour le deuxième angle de vue ; et au moins une image imprimée monochromatique transparente ayant au moins une longueur d'onde de pic de lumière réfléchie, sous éclairage par au moins une source de lumière visible, dans le bleu pour le premier angle de vue, et dans le jaune pour le deuxième angle de vue ;

- les longueurs d'onde des pics de lumière réfléchie par les pigments interférentiels, sous éclairage par la source de lumière visible, des images imprimées monochromatiques sont, pour chaque angle de vue, séparées d'une même distance spectrale comprise entre 80 nm et 100 nm, notamment égale à 90 nm ; avantageusement elle comprend, pour chaque angle de vue, une image imprimée monochromatique ayant une longueur d'onde dans le vert comprise entre 500 nm et 570 nm, une image imprimée monochromatique ayant une longueur d'onde dans le rouge comprise entre 600 nm et 680 nm, et une image imprimée monochromatique ayant une longueur d'onde dans le bleu comprise entre 430 nm et 480 nm ;
- les images imprimées monochromatiques d'un même jeu se succèdent dans l'ordre de réception de la lumière pour le premier angle de vue dans l'ordre bleu, rouge, vert des longueurs d'onde des pics de lumière réfléchie ; avantageusement, les images imprimées monochromatiques sont empilées les unes sur les autres sans couche intermédiaire ; les images imprimées monochromatiques présentent au moins sensiblement la même épaisseur d'impression ;
- chaque image imprimée monochromatique est formée d'une composition d'impression qui est transparente au moins pour la lumière visible ;
- elle comprend un premier jeu d'images imprimées monochromatiques positives comprenant des pigments interférentiels sous éclairage en lumière visible et adaptées pour reproduire en synthèse additive, un positif d'une image d'origine polychromatique, et un deuxième jeu d'images imprimées monochromatiques négatives comprenant des pigments interférentiels sous éclairage en lumière visible et adaptées pour reproduire en synthèse additive, un négatif d'une image d'origine polychromatique ; ces deux jeux peuvent être superposés et sont des reproductions d'une même image d'origine polychromatique, l'un en négatif, l'autre en positif ; en variante, ils sont des reproductions de deux images d'origines différentes.

L'invention s'étend aussi à l'utilisation d'une image selon l'invention. L'invention s'étend en particulier à l'utilisation d'une image selon l'invention pour le marquage en vue de l'identification et/ou de l'authentification de produits et de documents, en particulier de documents officiels -notamment passeports, cartes d'identité, permis de conduire, cartes d'immatriculation de véhicules ou autres, documents fiduciaires tels que billets de banque, chèques, cartes de crédit ou autres titres de paiement, titres de transport, tickets d'entrée, cartes donnant droit à des prestations diverses, etc.

L'invention s'étend aussi à un produit ou à un document comprenant au moins une image selon l'invention.

L'invention concerne également un tel procédé de réalisation d'une image transparente polychromatique imprimée iridescente quelconque, une telle image transparente polychromatique imprimée iridescente, et un tel produit ou un tel document officiel portant au moins une telle image, caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
- la figure 1 est une représentation schématique illustrant un une installation permettant la mise en oeuvre d'une étape d'un procédé selon l'invention,
- la figure 2 est un schéma illustrant diverses étapes d'un procédé selon l'invention,
- la figure 3 est un schéma illustrant un exemple de document protégé par une image transparente selon l'invention.

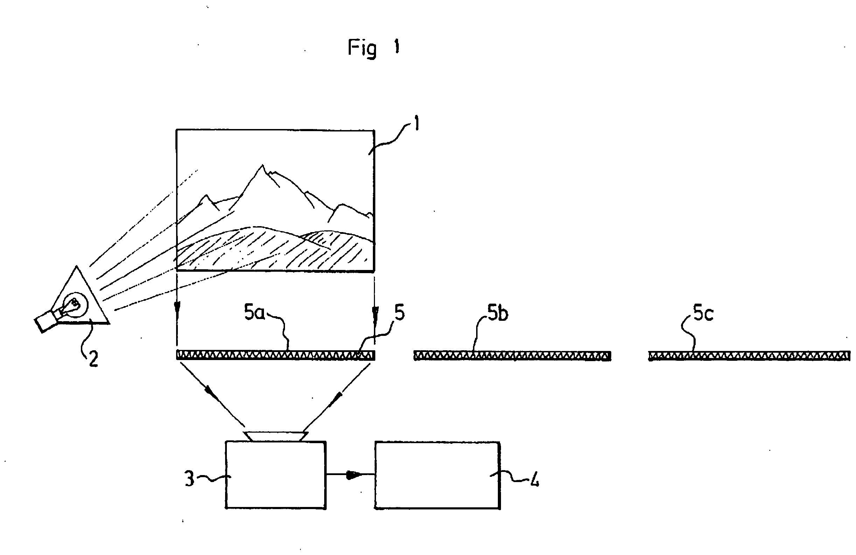

Une installation pour la mise en oeuvre d'un procédé selon l'invention représentée figure 1 comprend une image d'origine 1 polychromatique colorée selon le principe de la couleur matière (synthèse soustractive), visible en lumière visible telle qu'une photographie ou une image imprimée en quadrichromie traditionnelle, que l'on veut reproduire avec toutes les nuances de couleur et de forme, en obtenant une image 8 transparente polychromatique imprimée iridescente quelconque dont chaque couleur change simultanément selon une même variation d'angle de vue sous éclairage par au moins une source de lumière visible. Un original de cette image d'origine 1 polychromatique est éclairé à partir d'une source 2 de lumière visible telle que la lumière du jour ou une lampe à incandescence. La lumière éclairant l'image d'origine 1 polychromatique est une lumière blanche visible qui est réfléchie par l'image d'origine 1 en direction d'une caméra CCD 3 reliée à un micro-ordinateur 4 permettant de mémoriser les images captées par la caméra 3. Sur le chemin optique de la lumière réfléchie, un filtre 5 passe-bande est interposé. Ce filtre 5 est choisi parmi au moins trois filtres 5a, 5b, 5c interférentiels passe-bande dont la bande passante spectrale est inférieure à 15 nm -notamment de l'ordre de 10 nm-, et dont la longueur d'onde de filtrage est choisie au moins approximativement égale à la longueur d'onde d'un pic de lumière réfléchie par un pigment interférentiel sous éclairage en lumière visible, ce pigment étant par ailleurs adapté pour pouvoir autoriser l'impression ultérieure d'une image, c'est-à-dire pour être compatible avec les moyens et techniques d'impression utilisés comme décrits ci-après. Les longueurs d'onde de filtrage sont choisies parmi les longueurs d'onde d'au moins trois couleurs fondamentales pouvant former toutes les couleurs du spectre visible par synthèse additive. En particulier, trois longueurs d'onde suffisent pourvu que chaque couleur fondamentale ne puisse pas être équilibrée par les deux autres. On peut aussi utiliser plus de trois longueurs d'onde.

L'image issue du filtre 5 est une image filtrée monochromatique contrastée. La caméra 3 est donc une caméra monochrome. On réalise trois images 6a, 6b, 6c, filtrées monochromatiques avec, respectivement, chacun des trois filtres 5a, 5b, 5c, monochromateurs à partir de la même image d'origine 1 polychromatique. Ces trois images 6a, 6b, 6c, filtrées monochromatiques sont des images numérisées et enregistrées dans l'ordinateur 4. Chaque image 6a, 6b, 6c, filtrée monochromatique captée et numérisée par la caméra CCD 3 est enregistrée par l'ordinateur 4.

En variante non représentée, l'image d'origine polychromatique peut être une image numérisée enregistrée et on utilise des moyens de filtrage numérique pour réaliser, par calcul logiciel, chaque image filtrée monochromatique 6a, 6b, 6c. On peut aussi utiliser le filtrage numérique d'un scanner ayant une fonction de transfert adaptée aux longueurs d'ondes de filtrage.

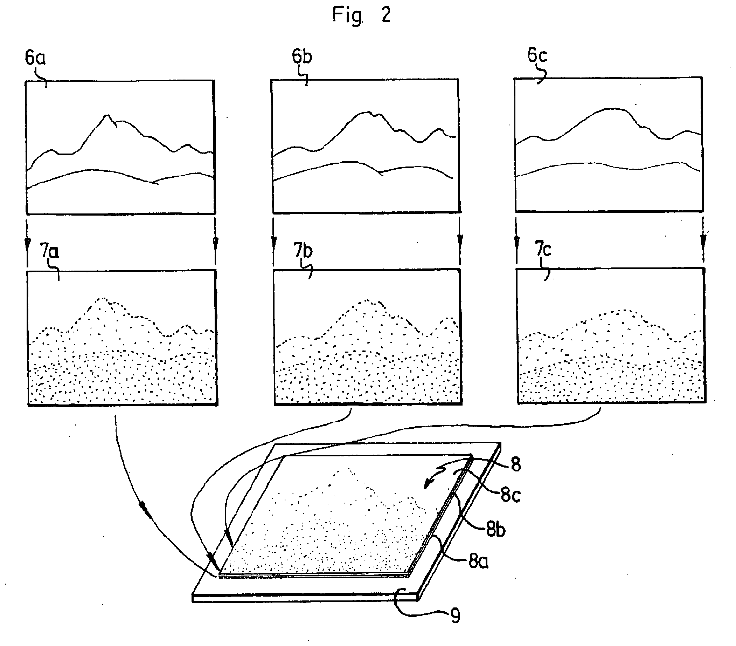

On réalise ensuite, comme représenté en figure 2, à partir des trois images 6a, 6b, 6c filtrées monochromatiques, trois trames 7a, 7b, 7c, d'impression flashées de façon traditionnelle dans de domaine de l'imprimerie sérigraphique, en utilisant, par exemple, une trame de 60 à 133 -notamment de l'ordre de 80-. La finesse de la trame est adaptée selon la viscosité de la composition d'impression et son extrait sec de façon connue en soi dans le domaine de la sérigraphie.

Ces trames 7a, 7b, 7c, d'impression sont formées chacune d'un film portant une image contrastée dont la densité de point de trame à chaque point de l'image correspond à l'intensité lumineuse de l'image 1 polychromatique que l'on souhaite reproduire.

Dans le cas ou l'on souhaite réaliser une reproduction positive de l'image d'origine 1 polychromatique, la densité de points de trame à chaque point de l'image contrastée dans la trame d'impression qui est en négatif correspond au flux lumineux de l'image d'origine 1 polychromatique réfléchie par le pigment interférentiel en ce point, respectivement selon chaque longueur d'onde de filtrage. Il faut donc dans ce cas réaliser une inversion des images 6a, 6b, 6c filtrées monochromatiques, qui sont des positifs, pour obtenir des trames 7a, 7b, 7c négatives d'impression sérigraphie. Cette inversion peut être réalisée soit par un logiciel de capture de l'image par la caméra CCD 3, soit à l'aide d'un logiciel de traitement d'image traditionnel à partir des images numérisées et enregistrées, soit par le logiciel de traitement de la flasheuse permettant de réaliser les trames d'impression.

Dans le cas contraire où l'on souhaite réaliser une reproduction négative de l'image d'origine 1 polychromatique, l'inversion des images 6a, 6b, 6c filtrées monochromatiques n'est pas réalisée, et les trames 7a, 7b, 7c d'impression sérigraphie sont des positifs.

On réalise les trames 7a, 7b, 7c d'impression sérigraphie sur des films transparents permettant ensuite de réaliser, par exemple par insolation d'un photopolymère, des écrans d'impression sérigraphique, un pour chaque image 6a, 6b, 6c, filtrée monochromatique.

Chaque écran sérigraphique est réalisé, à titre d'exemple non limitatif, à partir d'un tissu dont la maille comprend de 120 à 165 fils/cm, les fils ayant un diamètre compris entre 27 µm et 34 µm. On utilise une couche de matériau photopolymère de 18 µm d'épaisseur.

Chaque écran sérigraphique est ainsi représentatif, pour chaque longueur d'onde de filtrage, d'un flux lumineux réfléchi par l'image d'origine 1 polychromatique dans la longueur d'onde de filtrage correspondant au filtre utilisé, ou de l'inverse de ce flux lumineux.

On imprime ensuite, séparément, l'une après l'autre, et l'une au dessus de l'autre (avec ou, de préférence sans interposition d'une couche intermédiaire transparente) sur un support 9 d'impression transparent, trois images, dites images 8a, 8b, 8c, imprimées monochromatiques, de même format correspondant au format de l'image 8 polychromatique imprimée iridescente quelconque que l'on souhaite former. Le support 9 d'impression transparent peut être de toute nature dès lors qu'il est compatible avec la technique d'impression utilisée. Pour chaque image 8a, 8b, 8c, imprimée monochromatique, on utilise l'écran sérigraphique réalisé à partir de l'une des images 6a, 6b, 6c, filtrées monochromatiques, et une composition d'impression transparente comprenant un pigment interférentiel dont la longueur d'onde du pic de lumière réfléchie, sous éclairage 2 en lumière visible, est égale à la longueur d'onde de filtrage utilisé pour obtenir ladite image 6a, 6b, 6c, filtrée monochromatique. En utilisant successivement les trois écrans sérigraphiques correspondant aux trois images 6a, 6b, 6c, filtrées monochromatiques, on imprime successivement les trois images 8a, 8b, 8c, imprimées monochromatiques.

À titre de pigment interférentiel, on utilise avantageusement des pigments minéraux - notamment choisis parmi des oxydes métalliques-, qui sont bien adaptés pour être imprimés par sérigraphie, qui résistent au rayonnement d'une source de lumière non visible utilisée pour la mise en oeuvre de dispositifs d'authentification (en particulier, tels que décrit dans WO 0024587), et qui assurent la tenue dans le temps.

A titre de filtre 5 monochromateur, on peut utiliser par exemple des filtres interférentiels passe-bande commercialisés par la Société LOT ORIEL (Courtaboeuf, France) tel que mentionnés dans le tableau 1 ci-après.

**Tableau 1**

| Filtre | Longueur d'onde de filtrage | Couleur |
|---|---|---|
| 440 FS 10-50 | 440 nm | Bleu |
| 460 FS 10-50 | 460 nm | Bleu |
| 480 FS 10-50 | 480 nm | Bleu |
| 510 FS 10-50 | 510 nm | Vert |
| 530 FS 10-50 | 530 nm | Vert |
| 550 FS 10-50 | 550 nm | Vert |
| 620 FS 10-50 | 620 nm | Rouge |
| 660 FS 10-50 | 660 nm | Rouge |

Pour chaque impression d'une image 8a, 8b, 8c, imprimée monochromatique, le pigment interférentiel choisi est incorporé dans un milieu liquide d'impression formé d'un vernis sérigraphique choisi pour pouvoir être transparent lorsqu'il est sec et placé sous éclairage par au moins une source de lumière visible. De la sorte, la lumière de la source de lumière visible pourra atteindre et être réfléchie par les pigments interférentiels contenus dans le vernis sérigraphique imprimé pour être visible de l'extérieur, et ce sans déséquilibrage des couleurs.

Les images 8a, 8b, 8c imprimées monochromatiques sont transparentes en lumière visible, de sorte que l'image 8 polychromatique imprimée iridescente quelconque est en elle-même transparente pour la lumière visible et permet la visualisation des éventuelles mentions 12 sous-jacentes préalablement inscrites sur le support 9 d'impression transparent, par transparence.

On imprime les trois images 8a, 8b, 8c, sur le support 9 d'impression transparent en commençant de préférence par l'image 8a imprimée dont le pigment interférentiel réfléchit selon un premier angle de visualisation sensiblement perpendiculaire au plan de chaque image 8a, 8b, 8c, et au plan du support 9 d'impression, et sous éclairage en lumière visible, dans le bleu (longueur d'onde de 440 à 480 nm dans le tableau ci-dessus), puis en imprimant l'image 8b dont le pigment interférentiel réfléchit selon ce même angle de vue, et sous éclairage en lumière visible, dans le rouge (longueur d'onde de 620 à 660 nm dans le tableau ci-dessus), et en finissant par l'image 8c imprimée dont le pigment interférentiel réfléchit selon ce même angle de vue, et sous éclairage en lumière visible, dans le vert (longueur d'onde de 500 à 550 nm dans le tableau ci-dessus).

Ainsi, les différentes images 8a, 8b, 8c imprimées monochromatiques se présentent, selon ce même angle de vue, dans l'ordre 8a, bleu, 8b, rouge et 8c, vert des longueurs d'onde de réflexion, sous éclairage par au moins une source de lumière visible, des pigments interférentiels bleu, rouge et vert.

Par réorientation de l'image 8 polychromatique telle que précédemment décrite selon un deuxième angle de visualisation formant, avec le premier angle de visualisation, un angle de valeur comprise entre 10° et 45°, on obtient cette même image 8 polychromatique dans laquelle :
- l'image 8a imprimée apparaît, sous éclairage en lumière visible, en couleur jaune selon cet angle de vue, et ;
- l'image 8b imprimée apparaît, sous éclairage en lumière visible, en couleur verte selon cet angle de vue, et ;
- l'image 8c imprimée apparaît, sous éclairage en lumière visible, en couleur rouge selon cet angle de vue.

Les différentes images 8a, 8b, 8c imprimées monochromatiques sont imprimées successivement, soit directement les unes sur les autres, en respectant un temps de séchage entre chaque couche, soit en interposant entre elles éventuellement des couches transparentes continues. Une telle couche transparente est par exemple une couche de composition d'impression bi-composant polymérisable contenant un polyol hydroxylé et un isothiocyanate ou un poly-isothiocyanate de façon à engendrer la *polymérisation in situ* du mélange conduisant à un mince film transparent de polyuréthanne, comme décrit par exemple dans EP 0 271 941 ou US 5 232 527.

Les images 8a, 8b, 8c, imprimées monochromatiques sont toutes les trois imprimées avec les mêmes outils d'impression (les écrans sérigraphiques utilisés étant fabriqués à partir des mêmes tissus et avec le même matériau photopolymère). En particulier, on imprime les images 8a, 8b, 8c, imprimées monochromatiques avec la même épaisseur d'impression. Cette épaisseur est avantageusement comprise entre 3 µm et 12 µm selon les caractéristiques de l'écran sérigraphique utilisé. Bien sûr, l'épaisseur réelle de l'image 8a, 8b, 8c, imprimée monochromatique en chaque point dépend du motif de l'image, comme cela est toujours le cas en impression sérigraphique. Ainsi, pour chaque image 8a, 8b, 8c imprimée monochromatique en positif, la quantité de pigment interférentiel en chaque point est fonction de l'intensité réfléchie, sous éclairage en lumière visible, par l'image d'origine 1 polychromatique en ce point selon la longueur d'onde de filtrage correspondante.

Le vernis d'impression sérigraphique utilisé incorporant le pigment interférentiel est choisi pour ne pas être apte à émettre, par photoluminescence du vernis d'impression sérigraphique, de la lumière sous éclairage en lumière visible et ne pas déséquilibrer les couleurs de l'image 8 transparente polychromatique imprimée iridescente quelconque.

Le vernis d'impression sérigraphique utilisé est avantageusement un vernis à base de solvant(s) volatil(s) organique(s) non aqueux de type à durcissement par évaporation de solvant. De tel(s) solvant(s) contenu(s) dans un tel vernis d'impression sérigraphique s'évapore(nt) au cours du séchage et permet(tent) un bon accrochage des pigments sur la couche inférieure sur laquelle la composition d'impression est imprimée. En variante, le vernis d'impression sérigraphique utilisé peut être un vernis à polymérisation induite sous illumination ultraviolette.

On applique ensuite par impression une couche de surface formée d'un matériau adhésif adapté pour permettre la fixation de l'image 8 transparente sur un document à identifier et/ou authentifier. Après fixation de l'image 8 transparente en surface du document 10, la couche de surface extérieure de l'image 8 transparente est formée du support 9 transparent. Les images 8a, 8b, 8c monochromatiques s'étendent successivement à partir de la surface extérieure accessible sous illumination par au moins une source de lumière visible en direction du document 10 dans l'ordre bleu, rouge et vert.

On a décrit ci-dessus la réalisation d'une image 8 transparente polychromatique imprimée iridescente quelconque dont chaque couleur change selon une même valeur de variation d'un angle de vue sous éclairage en lumière visible formée par trois images 8a, 8b, 8c, imprimées monochromatiques.

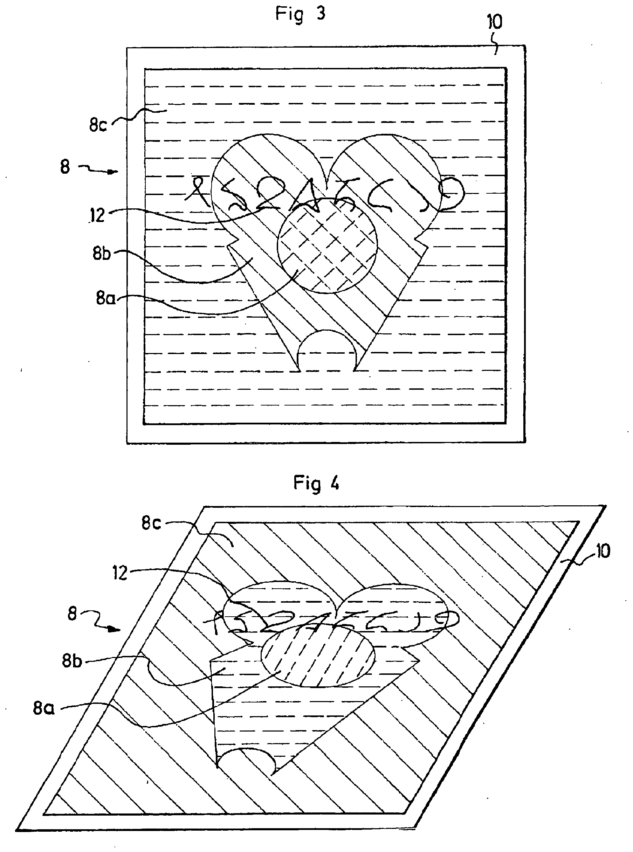

Une image 8 transparente polychromatique imprimée iridescente quelconque est représentée en figure 3 selon un premier angle de vue sensiblement perpendiculaire au plan de ladite image 8 transparente. Une telle image 8 transparente présente un document 10 à identifier et/ou authentifier sous-jacent sur lequel s'étendent de façon visible, à titre d'exemple non limitatif, des mentions 12 -notamment des caractères 12 d'écriture-. Sur la vue de face représentée en figure 3, les trois images 8a, 8b, 8c, imprimées monochromatiques superposées n'apparaissent pas. Dans cette configuration, dans laquelle l'angle de vision est sensiblement perpendiculaire au plan du document 10 et des images 8a, 8b, 8c, imprimées monochromatiques superposées :
- une troisième image 8c imprimée monochromatique, comprenant un troisième pigment interférentiel, s'étend en surface et au contact du document 10 et présente une couleur verte (schématisée par des tirets horizontaux) ;
- une deuxième image 8b imprimée monochromatique, comprenant un deuxième pigment interférentiel, s'étend en surface et au contact de la troisième image 8c imprimée monochromatique et présente une couleur rouge (schématisée par des traits obliques), et ;
- une première image 8a imprimée monochromatique, comprenant un premier pigment interférentiel, s'étend sur la face libre accessible de l'image 8 transparente polychromatique apposée sur le document 10 présente une couleur bleue (schématisée par un quadrillage de tirets obliques). Le support 9 d'impression transparent s'étend en surface de la première image 8a imprimée monochromatique bleue.

Dans cette configuration, la première image 8a imprimée monochromatique comprenant le premier pigment interférentiel bleu s'étend sous-jacent au support 9 d'impression, à proximité de la surface de l'image 8 transparente polychromatique, en recouvrant la deuxième image 8b imprimée monochromatique comprenant le deuxième pigment interférentiel rouge, ladite deuxième image 8b imprimée monochromatique recouvrant la troisième image 8c imprimée monochromatique comprenant le premier pigment interférentiel vert.

Il est à noter que dans l'exemple de l'image 8 transparente polychromatique représentée en figure 3, les pigments interférentiels des trois images 8a, 8b, 8c, imprimées monochromatiques ne se superposent pas et ne générèrent pas, par synthèse additive, de nouvelles couleurs distinctes des couleurs des trois pigments interférentiels bleu, rouge et vert. Une telle superposition est cependant bien sûr possible et permet d'obtenir toutes les couleurs du spectre visible par synthèse additive par superposition(s) partielle plus ou moins importante des trois images 8a, 8b 8c monochromatiques.

La même image 8 transparente polychromatique imprimée iridescente quelconque est représentée en figure 4 selon un premier angle de vue orienté à 25° par rapport au plan de ladite image 8 transparente représentée en figure 3. Une telle image 8 transparente présente le même document 10 sous-jacent que représenté en figure 3 sur lequel s'étendent de façon visible, à titre d'exemple non limitatif, des mentions 12 -notamment des caractères 12 d'écriture-. Dans cette configuration, dans laquelle l'angle de vision est sensiblement à 25° par rapport au plan du document 10 et des images 8a, 8b, 8c, imprimées monochromatiques superposées:
- la troisième image 8c imprimée monochromatique, comprenant le troisième pigment interférentiel, s'étend en surface et au contact du document 10 et présente une couleur rouge (schématisée par des traits obliques) ;
- la deuxième image 8b imprimée monochromatique, comprenant le deuxième pigment interférentiel, s'étend en surface et au contact de la troisième image 8c imprimée monochromatique et présente une couleur verte (schématisée par des tirets horizontaux), et ;
- la première image 8a imprimée monochromatique, comprenant un premier pigment interférentiel, s'étend sous-jacent au support 9 d'impression transparent, à proximité de la face libre accessible de l'image 8 transparente polychromatique apposée sur le document 10 et présente une couleur jaune (schématisée par des tirets obliques).

Dans cette configuration, la première image 8a imprimée monochromatique comprenant le premier pigment interférentiel de couleur jaune s'étend en surface de l'image 8 transparente polychromatique, en recouvrant la deuxième image 8b imprimée monochromatique comprenant le deuxième pigment interférentiel de couleur verte, ladite deuxième image 8b imprimée monochromatique recouvrant la troisième image 8c imprimée monochromatique comprenant le premier pigment interférentiel de couleur rouge dans cet angle de vision, ladite troisième image 8c imprimée monochromatique étant appliquée en surface du document 10 à identifier et/ou authentifier.

Dans cette configuration, le changement d'angle de vue de ladite image 8 transparente conduit à une permutation des couleurs rouge et verte l'une en l'autre et à un basculement de la couleur bleue en jaune et de la couleur jaune en bleu.

### EXEMPLE 1

On réalise une image transparente polychromatique imprimée iridescente quelconque dont chaque couleur change lors d'un changement d'un angle de vue de ladite image sous éclairage par au moins une source de lumière visible. On forme une telle image dans laquelle une couleur rouge et une couleur verte permutent l'une pour l'autre lors de la réorientation à 25° de ladite image. Sur un support 9 d'impression transparent formé d'un film de type Fasprotek^{®}, Fasfilm^{®} ou Transfilm^{®} (FASVER, Baillargues, France), on imprime successivement par sérigraphie deux images filtrées monochromatiques. Chaque écran sérigraphique est réalisé, à partir d'un tissu dont la maille comprend de 120 fils/cm, les fils ayant un diamètre de 34 µm. On prépare une première composition d'impression comprenant 20% en poids d'une poudre formée de particules d'un pigment interférentiel de couleur rouge (Xirallic^{®}, T60-21 SW, Solaris Red, Merck, Darmstadt, Allemagne), dispersées dans un milieu liquide d'impression (Solubilis, Tiflex, Poncin, France). On prépare en parallèle une deuxième composition d'impression comprenant 20% en poids d'une poudre formée de particules d'un pigment interférentiel de couleur verte (Xirallic^{®}, T60-24 SW, Stellar green, Merck, Darmstadt, Allemagne), dispersées dans un milieu liquide d'impression (Solubilis, Tiflex, Poncin, France). On dépose la première composition en utilisant, et en reproduisant respectivement une première image filtrée monochromatique, de façon à former une première image imprimée monochromatique transparente. On dépose ensuite au dessus de ladite première image imprimée monochromatique transparente, la deuxième composition d'impression en utilisant, et en reproduisant respectivement une deuxième image filtrée monochromatique, de façon à former une deuxième image imprimée monochromatique transparente superposée sur la première image filtrée monochromatique et adaptée pour former avec la première image filtrée monochromatique adaptées pour former par synthèse additive toutes les couleurs d'une image d'origine. On imprime ensuite une couche d'un adhésif adapté pour permettre la fixation de l'image transparente polychromatique imprimée iridescente quelconque dont chaque couleur change lors d'un changement d'un angle de vue de ladite image sous éclairage par au moins une source de lumière visible sur un document.

### EXEMPLE 2

On réalise une impression par sérigraphie comme décrit à l'exemple 1. On prépare une première composition d'impression comprenant 20% en poids d'une poudre formée de particules d'un pigment interférentiel de couleur jaune (Xirallic^{®}, T60-20 SW, Sunbeam gold, Merck, Darmstadt, Allemagne), dispersées dans un milieu liquide d'impression (Solubilis, Tiflex, Poncin, France). On prépare en parallèle une deuxième composition d'impression comprenant 20% en poids d'une poudre formée de particules d'un pigment interférentiel de couleur bleue (Xirallic^{®}, T60-23 SW, Galaxy blue, Merck, Darmstadt, Allemagne), dispersées dans un milieu liquide d'impression (Solubilis, Tiflex, Poncin, France).

### EXEMPLE 3

On réalise une image transparente polychromatique imprimée iridescente quelconque dont chaque couleur change lors d'un changement d'un angle de vue de ladite image sous éclairage par au moins une source de lumière visible. On forme une telle image polychromatique transparente dans laquelle une couleur rouge et une couleur verte permutent l'une pour l'autre tandis qu'une couleur bleue change en une couleur jaune lors de la réorientation à 25° de ladite image. A partir d'une image polychromatique obtenue par synthèse soustractive, on enregistre et on stocke dans une mémoire d'un ordinateur trois images filtrées monochromatiques par filtrage de l'image d'origine. On obtient de telles images filtrées monochromatiques au moyen de filtre de bande passante étroite -notamment de l'ordre de 15 nm- de façon à obtenir trois images filtrées monochromatiques correspondantes aux teintes bleue, rouge et verte de l'image d'origine. Sur un support d'impression transparent formé d'un film de type Fasprotek^{®}, Fasfilm^{®} ou Transfilm^{®} (FASVER, Baillargues, France), on imprime successivement par sérigraphie les trois images filtrées monochromatiques. Chaque écran sérigraphique est réalisé, à partir d'un tissu dont la maille comprend de 120 fils/cm, les fils ayant un diamètre de 34 µm. On prépare une première composition d'impression comprenant 20% en poids d'une poudre formée de particules d'un pigment interférentiel de couleur bleue (Xirallic^{®}, T60-23 SW, Galaxy blue, Merck, Darmstadt, Allemagne) dispersées dans un milieu liquide d'impression (Solubilis, Tiflex, Poncin, France). On prépare une deuxième composition d'impression comprenant 20% en poids d'une poudre formée de particules d'un pigment interférentiel de couleur rouge (Xirallic^{®}, T60-21 SW, Solaris Red, Merck, Darmstadt, Allemagne), dispersées dans un même milieu liquide d'impression (Solubilis, Tiflex, Poncin, France). On prépare aussi une troisième composition d'impression comprenant 20% en poids d'une poudre formée de particules d'un pigment interférentiel de couleur verte (Xirallic^{®}, T60-24 SW, Stellar green, Merck, Darmstadt, Allemagne), dispersées dans un milieu liquide d'impression (Solubilis, Tiflex, Poncin, France). On dépose la première composition d'impression bleue en utilisant, et en reproduisant respectivement l'image filtrée monochromatique (obtenue avec le filtre dans le bleu), de façon à former une première image imprimée monochromatique (bleue) transparente. On dépose ensuite au dessus de ladite première image imprimée monochromatique transparente bleue, la deuxième composition d'impression rouge en utilisant, et en reproduisant respectivement l'image filtrée monochromatique (obtenue avec le filtre dans le bleu), de façon à former une deuxième image imprimée monochromatique (rouge) transparente superposée sur la première image filtrée monochromatique (bleue) transparente. On dépose ensuite au dessus de la deuxième image imprimée monochromatique transparente rouge, la troisième composition d'impression verte en utilisant, et en reproduisant respectivement l'image filtrée monochromatique (obtenue avec le filtre dans le vert), de façon à former une troisième image imprimée monochromatique (verte) transparente superposée sur la deuxième image filtrée monochromatique (rouge) transparente.

Une telle superposition des trois images filtrées monochromatiques transparentes bleue, rouge, verte est adaptée pour former par synthèse additive toutes les couleurs d'une image d'origine. On imprime ensuite une couche d'un adhésif adapté pour permettre la fixation de l'image transparente polychromatique imprimée iridescente quelconque dont chaque couleur change lors d'un changement d'un angle de vue de ladite image sous éclairage par au moins une source de lumière visible sur un document.

L'invention peut faire l'objet de très nombreuses variantes de réalisation. En particulier, il est possible d'ajouter d'autres types de pigments en plus des pigments interférentiels.

## Revendications

1. Procédé de réalisation d'une image (8) transparente polychromatique imprimée iridescente quelconque dont au moins deux couleurs changent simultanément lors d'un changement d'angle de vue de ladite image sous éclairage par au moins une source de lumière visible, **caractérise en ce que** :
- on imprime séparément, l'une après l'autre, au moins deux images, dites images imprimées monochromatiques,
- chaque image imprimée monochromatique est imprimée en utilisant une composition d'impression comprenant une proportion d'une poudre comprenant au moins un pigment interférentiel, ladite poudre étant dispersée dans un milieu liquide d'impression, chaque pigment interférentiel et ladite proportion sont choisis de telle sorte que ladite image imprimée monochromatique est transparente,
- les pigments interférentiels de chaque composition d'impression sont choisis de façon que les images imprimées monochromatiques soient de couleurs différentes,
- les différentes images imprimées monochromatiques forment, selon une première plage angulaire de visualisation, une image polychromatique transparente selon une première composition de couleurs en synthèse additive, et selon une deuxième plage angulaire de visualisation, différente de ladite première plage angulaire de visualisation, une deuxième composition de couleurs en synthèse additive.

2. Procédé selon la revendication 1 **caractérise en ce que** :
- on choisit ou on réalise une image d'origine (1) polychromatique en synthèse soustractive visible en lumière visible;
- on réalise et on enregistre au moins trois images, dites images (6a, 6b, 6c) filtrées monochromatiques, par filtrage de l'image d'origine (1) selon une bande passante spectrale inférieure ou égale à 15 nm centrée sur une longueur d'onde, dite longueur d'onde de filtrage, choisie parmi les longueurs d'onde d'au moins trois couleurs fondamentales, les différentes longueurs d'onde de filtrage des images (6a, 6b, 6c) filtrées monochromatiques étant deux à deux distinctes, chacune de ces longueurs d'onde de filtrage étant au moins approximativement égale à une longueur d'onde d'un pic de lumière réfléchie par un pigment interférentiel, sous éclairage par au moins une source de lumière visible;
- on imprime chaque image (8a, 8b, 8c) imprimée monochromatique en reproduisant respectivement l'une des images (6a, 6b, 6c) filtrées monochromatiques, et en utilisant une composition d'impression comprenant au moins un pigment interférentiel présentant une longueur d'onde d'un pic de lumière réfléchie correspondant à ladite bande spectrale de filtrage.

3. Procédé selon l'une des revendications 1 ou 2, **caractérisé en ce que** :
- on réalise et on enregistre au moins trois images (6a, 6b, 6c) filtrées monochromatiques, les différentes longueurs d'onde de filtrage des images (6a, 6b, 6c) filtrées monochromatiques étant adaptées pour permettre de former par synthèse additive toutes les couleurs du spectre visible ;
- on imprime séparément l'une après l'autre au moins trois images (8a, 8b, 8c) imprimées monochromatiques.

4. Procède selon l'une des revendications 1 à 3, **caractérisé en ce qu'**on utilise une composition d'impression dans laquelle le pic de lumière réfléchie par chaque pigment interférentiel, sous éclairage par au moins une source de lumière visible, présente une largeur à 80% de la hauteur dudit pic comprise entre 10 nm et 30 nm.

5. Procédé selon l'une des revendications 1 à 4, **caractérisé en ce qu'**on utilise une composition d'impression dans laquelle le pic de lumière réfléchie par chaque pigment interférentiel, sous éclairage par au moins une source de lumière visible, présente une largeur à 20% de la hauteur dudit pic comprise entre 15 nm et 40 nm.

6. Procédé selon l'une des revendications 1 à 5, **caractérisé en ce qu'**on utilise une composition d'impression dans laquelle chaque pigment interférentiel est forme de particules présentant une plus grande dimension moyenne comprise entre 5 µm et 40 µm.

7. Procédé selon l'une des revendications 1 à 6, **caractérisé en ce qu'**on utilise une composition d'impression dans laquelle les particules formant chaque pigment interférentiel sont des lamelles formées d'au moins un oxyde métallique.

8. Procédé selon la revendication 7, **caractérisé en ce qu'**on utilise une composition d'impression dans laquelle chaque oxyde métallique est choisi dans le groupe forme des oxydes de titane, des oxydes d'aluminium et des oxydes d'étain.

9. Procédé selon l'une des revendications 1 à 8, **caractérisé en ce qu'**on utilise une composition d'impression dans laquelle la proportion massique de chaque pigment interférentiel est supérieure à 10%.

10. Procédé selon l'une des revendications 1 à 9, **caractérisé en ce que** la proportion massique de chaque pigment interférentiel dans le milieu liquide d'impression est inférieure à 25%.

11. Image imprimée iridescente quelconque transparente et polychromatique, dans laquelle au moins deux couleurs de ladite image imprimée iridescente quelconque changent simultanément lors d'un changement d'angle de vue de ladite image sous éclairage par au moins une source de lumière visible ;
**caractérisée en ce que** lors du changement d'angle de vue de ladite image sous éclairage par au moins une source de lumière visible, une première couleur initiale permute en une première couleur finale et une deuxième couleur initiale permute simultanément en une deuxième couleur finale, la première couleur initiale étant sensiblement identique à la deuxième couleur finale, et la deuxième couleur initiale étant sensiblement identique à la première couleur finale.

12. Image transparente polychromatique imprimée iridescente quelconque obtenue par un procédé selon l'une des revendications 1 à 10, dans laquelle :
- au moins deux couleurs de ladite image (8) transparente polychromatique imprimée changent simultanément lors d'un changement d'angle de vue de ladite image sous éclairage par au moins une source de lumière visible ;
- la valeur de changement d'angle de vue pour laquelle le changement de couleur de l'image transparente polychromatique imprimée iridescente quelconque est visualise est inférieure ou égale à 45° ;
- ladite image (8) transparente comprenant au moins un jeu d'au moins deux images, dites images (8a, 8b, 8c) imprimées monochromatiques, chaque image (8a, 8b, 8c) imprimée monochromatique comprenant au moins un pigment interférentiel réfléchissant une couleur sous éclairage par au moins une source de lumière visible.

13. Image selon l'une des revendications 11 ou 12, **caractérisée en ce qu'**elle présente au moins trois couleurs changeant simultanément lors d'un changement d'angle de vue sous éclairage par au moins une source de lumière visible.

14. Image selon l'une des revendications 11 à 13, **caractérisée en ce qu'**elle comprend au moins une image (8a, 8b, 8c) imprimée monochromatique transparente ayant au moins une longueur d'onde de pic de lumière réfléchie, sous éclairage par au moins une source de lumière visible, dans le vert pour un premier angle de vue, et dans le rouge pour un deuxième angle de vue distinct du premier angle de vue ; au moins une image (8a, 8b, 8c) imprimée monochromatique transparente ayant au moins une longueur d'onde de pic de lumière réfléchie, sous éclairage par au moins une source de lumière visible, dans le rouge pour le premier angle de vue, et dans le vert pour le deuxième angle de vue ; et au moins une image (8a, 8b, 8c) imprimée monochromatique transparente ayant au moins une longueur d'onde de pic de lumière réfléchie, sous éclairage par au moins une source de lumière visible, dans le bleu pour le premier angle de vue, et dans le jaune pour le deuxième angle de vue.

15. Utilisation d'une image selon l'une des revendications 11 à 14 pour le marquage en vue de l'identification et/ou de l'authentification de produits ou de documents, en particulier de documents -notamment un passeport, une carte d'identité, un permis de conduire, une carte d'immatriculation d'un véhicule, un billet de banque, un chèque, une carte de crédit ou autre titre de paiement, un titre de transport, des tickets d'entrée, des cartes donnant droit à des prestations diverses-.

## Patentansprüche

1. Verfahren zum Erzeugen eines beliebigen irisierenden, polychromatischen, transparenten, gedruckten Bildes (8), wobei sich mindestens zwei Farben gleichzeitig ändern, wenn der Betrachtungswinkel des Bildes unter Beleuchtung durch mindestens eine Quelle sichtbaren Lichts geändert wird, **dadurch gekennzeichnet, dass**:
- mindestens zwei Bilder, bekannt als monochromatische gedruckte Bilder, getrennt, eins nach dem anderen, gedruckt werden,
- jedes monochromatische gedruckte Bild unter Verwendung einer Druckzusammensetzung gedruckt wird, die einen Anteil eines Pulvers aufweist, das mindestens ein Interferenzpigment aufweist, wobei das Pulver in einem flüssigen Druckmedium dispergiert ist; jedes Interferenzpigment und der Anteil so ausgewählt werden, dass das monochromatische gedruckte Bild transparent ist,
- die Interferenzpigmente jeder Druckzusammensetzung so ausgewählt werden, dass die monochromatischen gedruckten Bilder unterschiedliche Farben aufweisen,
- die verschiedenen monochromatischen gedruckten Bilder in einem ersten Winkelsichtbereich ein transparentes polychromatisches Bild mit einer ersten additiven Farbzusammensetzung und in einem zweiten Winkelsichtbereich, der sich von dem ersten Winkelsichtbereich unterscheidet, eine zweite additive Farbzusammensetzung bilden.

2. Verfahren nach Anspruch 1, **dadurch gekennzeichnet, dass**:
- ein originales polychromatisches Bild (1) unter Verwendung einer subtraktiven Synthese von sichtbarem Licht ausgewählt oder erzeugt wird;
- mindestens drei Bilder, bekannt als gefilterte monochromatische Bilder (6a, 6b, 6c), durch Filtern des Originalbildes (1) unter Verwendung einer spektralen Bandbreite von weniger als oder gleich 15 nm, zentriert auf eine Wellenlänge, bekannt als die Filterwellenlänge, ausgewählt aus den Wellenlängen von mindestens drei Primärfarben, erzeugt und aufgezeichnet werden, wobei die verschiedenen Filterwellenlängen der gefilterten monochromatischen Bilder (6a, 6b, 6c) getrennt gepaart werden, wobei jede dieser Filterwellenlängen mindestens annähernd gleich einer Wellenlänge einer Lichtspitze ist, die unter Beleuchtung durch mindestens eine Quelle sichtbaren Lichts von einem Interferenzpigment reflektiert wird;
- jedes monochromatische gedruckte Bild (8a, 8b, 8c) gedruckt wird, indem jeweils eines der gefilterten monochromatischen Bilder (6a, 6b, 6c) reproduziert wird und eine Druckzusammensetzung verwendet wird, die mindestens ein Interferenzpigment mit einer Wellenlänge einer reflektierten Lichtspitze aufweist, die dem filternden Spektralband entspricht.

3. Verfahren nach einem der Ansprüche 1 oder 2, **dadurch gekennzeichnet, dass**
- mindestens drei gefilterte monochromatische Bilder (6a, 6b, 6c) erzeugt und aufgezeichnet werden, wobei die verschiedenen filternden Wellenlängen der gefilterten monochromatischen Bilder (6a, 6b, 6c) angepasst werden, um zu ermöglichen, dass alle Farben des sichtbaren Spektrums durch additives Mischen gebildet werden;
- mindestens drei monochromatische gedruckte Bilder (8a, 8b, 8c) getrennt, eins nach dem anderen, gedruckt werden.

4. Verfahren nach einem der Ansprüche 1 bis 3, **dadurch gekennzeichnet, dass** eine Druckzusammensetzung verwendet wird, wobei die Lichtspitze, die von jedem Interferenzpigment reflektiert wird, unter Beleuchtung durch mindestens eine Quelle sichtbaren Lichts bei 80 % der Höhe der Spitze eine Breite aufweist, die zwischen 10 nm und 30 nm beträgt.

5. Verfahren nach einem der Ansprüche 1 bis 4, **dadurch gekennzeichnet, dass** eine Druckzusammensetzung verwendet wird, wobei die Lichtspitze, die von jedem Interferenzpigment reflektiert wird, unter Beleuchtung durch mindestens eine Quelle sichtbaren Lichts bei 20 % der Höhe der Spitze eine Breite aufweist, die zwischen 15 nm und 40 nm beträgt.

6. Verfahren nach einem der Ansprüche 1 bis 5, **dadurch gekennzeichnet, dass** eine Druckzusammensetzung verwendet wird, wobei jedes Interferenzpigment aus Teilchen mit einer durchschnittlichen größeren Abmessung, die zwischen 5 µm und 40 µm aufweist, zusammengesetzt ist.

7. Verfahren nach einem der Ansprüche 1 bis 6, **dadurch gekennzeichnet, dass** eine Druckzusammensetzung verwendet wird, wobei die Teilchen, aus denen jedes Interferenzpigment zusammengesetzt ist, Lamellen sind, die aus mindestens einem Metalloxid gebildet sind.

8. Verfahren nach Anspruch 7, **dadurch gekennzeichnet, dass** eine Druckzusammensetzung verwendet wird, wobei jedes Metalloxid aus der Gruppe ausgewählt wird, die aus Titanoxiden, Aluminiumoxiden und Zinnoxiden besteht.

9. Verfahren nach einem der Ansprüche 1 bis 8, **dadurch gekennzeichnet, dass** eine Druckzusammensetzung verwendet wird, wobei der Masseanteil jedes Interferenzpigments größer als 10 % ist.

10. Verfahren nach einem der Ansprüche 1 bis 9, **dadurch gekennzeichnet, dass** der Masseanteil jedes Interferenzpigments in dem flüssigen Druckmedium kleiner als 25 % ist.

11. Beliebiges irisierendes, polychromatisches, transparentes, gedrucktes Bild, wobei sich mindestens zwei Farben des beliebigen irisierenden gedruckten Bildes gleichzeitig ändern, wenn der Betrachtungswinkel des Bildes unter Beleuchtung durch mindestens eine Quelle sichtbaren Lichtes geändert wird;
**dadurch gekennzeichnet, dass**, wenn der Betrachtungswinkel des Bildes unter Beleuchtung durch mindestens eine Quelle sichtbaren Lichts geändert wird, eine erste Anfangsfarbe zu einer ersten Endfarbe und gleichzeitig eine zweite Anfangsfarbe zu einer zweiten Endfarbe verschoben wird, wobei die erste Anfangsfarbe im Wesentlichen identisch mit der zweiten Endfarbe ist und die zweite Anfangsfarbe im Wesentlichen identisch mit der ersten Endfarbe ist.

12. Beliebiges irisierendes, polychromatisches, transparentes, gedrucktes Bild, das durch ein Verfahren nach einem der Ansprüche 1 bis 10 erhalten wird, wobei:
- mindestens zwei Farben des beliebigen irisierenden, polychromatischen, transparenten, gedruckten Bildes (8) sich gleichzeitig ändern, wenn der Betrachtungswinkel des Bildes unter Beleuchtung durch mindestens eine Quelle sichtbaren Lichts geändert wird;
- der Betrag der Änderung des Betrachtungswinkels, bei dem die Farbänderung eines beliebigen irisierenden, polychromatischen, transparenten, gedruckten Bildes betrachtet wird, kleiner als oder gleich 45° ist;
- das transparente Bild (8), das mindestens einen Satz von mindestens zwei Bildern aufweist, bekannt als monochromatische gedruckte Bilder (8a, 8b, 8c), wobei jedes monochromatische gedruckte Bild (8a, 8b, 8c) mindestens ein Interferenzpigment aufweist, das unter Beleuchtung durch mindestens eine Quelle sichtbaren Lichts eine Farbe reflektiert.

13. Bild nach einem der Ansprüche 11 oder 12, **dadurch gekennzeichnet, dass** es mindestens drei Farben aufweist, die sich gleichzeitig ändern, wenn der Betrachtungswinkel unter Beleuchtung durch mindestens eine Quelle sichtbaren Lichts geändert wird.

14. Bild nach einem der Ansprüche 11 bis 13, **dadurch gekennzeichnet, dass** es aufweist: mindestens ein transparentes, monochromatisches, gedrucktes Bild (8a, 8b, 8c) mit mindestens einer Spitzenwellenlänge des reflektierten Lichts, unter Beleuchtung durch mindestens eine Quelle sichtbaren Lichts, im Grünen für einen ersten Betrachtungswinkel und im Roten für einen zweiten Betrachtungswinkel, der sich vom ersten Betrachtungswinkel unterscheidet; mindestens ein transparentes, monochromatisches, gedrucktes Bild (8a, 8b, 8c) mit mindestens einer Spitzenwellenlänge des reflektierten Lichts, unter Beleuchtung durch mindestens eine Quelle sichtbaren Lichts, im Roten für den ersten Betrachtungswinkel und im Grünen für den zweiten Betrachtungswinkel; und mindestens ein transparentes, monochromatisches, gedrucktes Bild (8a, 8b, 8c) mit mindestens einer Spitzenwellenlänge des reflektierten Lichts, unter Beleuchtung durch mindestens eine Quelle sichtbaren Lichts, im Blauen für den ersten Betrachtungswinkel und im Gelben für den zweiten Betrachtungswinkel.

15. Benutzung eines Bildes nach einem der Ansprüche 11 bis 14 zum Kennzeichnen, um Produkte oder Dokumente, insbesondere Dokumente - besonders Reisepässe, Personalausweise, Führerscheine, Fahrzeuganmeldekarten, Banknoten, Schecks, Kreditkarten oder andere Formen von Zahlung, Dauerfahrkarten, Eintrittskarten, Karten, die den Inhaber zu verschiedenen Dienstleistungen berechtigen, zu identifizieren und/oder authentisieren -.

## Claims

1. A method for producing any iridescent polychromatic transparent printed image (8) in which at least two colors change simultaneously when the viewing angle of said image is changed under lighting from at least one source of visible light, **characterized in that**:
- at least two images, known as monochromatic printed images, are printed separately, one after the other,
- each monochromatic printed image is printed using a printing composition comprising a proportion of a powder comprising at least one interference pigment, said powder being dispersed in a liquid printing medium; each interference pigment and said proportion are chosen such that said monochromatic printed image is transparent,
- the interference pigments of each printing composition are chosen such that the monochromatic printed images are of different colors,
- the various monochromatic printed images form, in a first angular viewing range, a transparent polychromatic image with a first additive color composition, and in a second angular viewing range, different from said first angular viewing range, a second additive color composition.

2. The method according to claim 1, **characterized in that**:
- an original polychromatic image (1) is chosen or produced using visible light subtractive synthesis;
- at least three images, known as filtered monochromatic images (6a, 6b, 6c), are produced and recorded by filtering the original image (1) using a spectral bandwidth of less than or equal to 15 nm centered on a wavelength, known as the filtering wavelength, chosen among the wavelengths of at least three primary colors, the various filtering wavelengths of the filtered monochromatic images (6a, 6b, 6c) being paired separately, each of these filtering wavelengths being at least approximately equal to a wavelength of a light peak reflected by an interference pigment, under lighting from at least one source of visible light;
- each monochromatic printed image (8a, 8b, 8c) is printed by respectively reproducing one of the filtered monochromatic images (6a, 6b, 6c), and using a printing composition comprising at least one interference pigment with a wavelength of a reflected light peak corresponding to said filtering spectral band.

3. The method according to any of claims 1 or 2, **characterized in that**
- at least three filtered monochromatic images (6a, 6b, 6c) are produced and recorded, the various filtering wavelengths of the filtered monochromatic images (6a, 6b, 6c) being adapted to enable all of the colors of the visible spectrum to be formed by additive mixing;
- at least three monochromatic printed images (8a, 8b, 8c) are printed separately one after the other.

4. The method according to any of claims 1 to 3, **characterized in that** a printing composition is used in which the light peak reflected by each interference pigment, under lighting from at least one source of visible light, has a width at 80% of the height of said peak comprised between 10 nm and 30 nm.

5. The method according to any of claims 1 to 4, **characterized in that** a printing composition is used in which the light peak reflected by each interference pigment, under lighting from at least one source of visible light, has a width at 20% of the height of said peak comprised between 15 nm and 40 nm.

6. The method according to any of claims 1 to 5, **characterized in that** a printing composition is used in which each interference pigment is made up of particles with an average larger size comprised between 5 µm and 40 µm.

7. The method according to any of claims 1 to 6, **characterized in that** a printing composition is used in which the particles that make up each interference pigment are lamellae formed from at least one metal oxide.

8. The method according to claim 7, **characterized in that** a printing composition is used in which each metal oxide is chosen from the group consisting of titanium oxides, aluminum oxides and tin oxides.

9. The method according to any of claims 1 to 8, **characterized in that** a printing composition is used in which the proportion by mass of each interference pigment is greater than 10%.

10. The method according to any of claims 1 to 9, **characterized in that** the proportion by mass of each interference pigment in the liquid printing medium is less than 25%.

11. Any iridescent polychromatic transparent printed image, in which at least two colors of said any iridescent printed image change simultaneously when the viewing angle of said image is changed under lighting from at least one source of visible light;
**characterized in that**, when the viewing angle of said image is changed under lighting from at least one source of visible light, a first initial color shifts to a first final color and a second initial color simultaneously shifts to a second final color, the first initial color being substantially identical to the second final color, and the second initial color being substantially identical to the first final color.

12. Any iridescent polychromatic transparent printed image obtained by a method according to any of claims 1 to 10, in which:
- at least two colors of said any iridescent polychromatic transparent printed image (8) change simultaneously when the viewing angle of said image is changed under lighting from at least one source of visible light;
- the viewing angle change value at which the color change of any iridescent polychromatic transparent printed image is viewed is less than or equal to 45°;
- said transparent image (8) comprising at least one set of at least two images, known as monochromatic printed images (8a, 8b, 8c), each monochromatic printed image (8a, 8b, 8c) comprising at least one interference pigment reflecting a color under lighting from at least one source of visible light.

13. The image according to any of claims 11 or 12, **characterized in that** it has at least three colors that change simultaneously when the viewing angle is changed under lighting from at least one source of visible light.

14. The image according to any of claims 11 to 13, **characterized in that** it comprises at least one transparent monochromatic printed image (8a, 8b, 8c) with at least one peak wavelength of reflected light, under lighting from at least one source of visible light, in the green for a first viewing angle, and in the red for a second viewing angle different from the first viewing angle; at least one transparent monochromatic printed image (8a, 8b, 8c) with at least one peak wavelength of reflected light, under lighting from at least one source of visible light, in the red for the first viewing angle, and in the green for the second viewing angle; and at least one transparent monochromatic printed image (8a, 8b, 8c) with at least one peak wavelength of reflected light, under lighting from at least one source of visible light, in the blue for the first viewing angle, and in the yellow for the second viewing angle.

15. Use of an image according to any of claims 11 to 14 for marking to identify and/or authenticate products or documents, in particular documents - particularly passports, identity cards, driver's licenses, vehicle registration cards, banknotes, checks, credit cards or other forms of payment, travel passes, admission tickets, cards entitling the holder to various services -.
